# EUROPÄISCHE PATENTSCHRIFT

(11) **EP 3 515 796 B1**
(45) Veröffentlichungstag und Bekanntmachung des Hinweises auf die Patenterteilung: **05.08.2020**
(21) Anmeldenummer: 17761807.1
(22) Anmeldetag: 05.09.2017
(51) Int. Cl.: B62D 53/08, B62D 53/12

(54) **VERFAHREN ZUR ERKENNUNG UND/ODER STEUERUNG EINES ANKUPPLUNGSVORGANGS ZWISCHEN EINEM ZUGFAHRZEUG UND EINEM FAHRZEUGANHÄNGER**
METHOD FOR DETECTING AND/OR CONTROLLING A COUPLING PROCESS BETWEEN A TOWING VEHICLE AND A VEHICLE TRAILER
PROCÉDÉ PERMETTANT DE DÉTECTER ET/OU DE COMMANDER UNE OPÉRATION D'ATTELAGE ENTRE UN VÉHICULE TRACTEUR ET UNE REMORQUE DE VÉHICULE

(30) Priorität: 21.09.2016 DE 102016011323
(43) Veröffentlichungstag der Anmeldung: 31.07.2019
(73) Patentinhaber: WABCO GmbH, 30453 Hannover (DE)
(72) Erfinder: SCHAEPER, Finn, 30519 Hannover (DE); WOLF, Thomas, 30890 Barsinghausen (DE)
(74) Vertreter: Koschnitzki, Thomas
(86) Internationale Anmeldenummer: PCT/EP2017/001048
(87) Internationale Veröffentlichungsnummer: WO 2018/054525

(56) Entgegenhaltungen:
- WO-A1-2005/108194
- WO-A1-2007/102777

## Beschreibung

Die Erfindung betrifft ein Verfahren zur Steuerung eines Ankupplungsvorgangs zwischen einem Zugfahrzeug und einem als Sattelauflieger ausgebildeten Fahrzeuganhänger, wobei das Zugfahrzeug eine Kupplungsplatte und der Sattelauflieger eine Sattelplatte mit einem Sattelzapfen aufweist, welcher im gekuppelten Zustand in einer Verriegelungsvorrichtung der Kupplungsplatte fixiert ist, und bei dem das Zugfahrzeug eine pneumatische Niveauregelungseinrichtung aufweist, mittels der sich der Abstand zwischen der wenigstens einen Hinterachse des Zugfahrzeugs und der Verriegelungsvorrichtung der Kupplungsplatte unterschiedlich einstellen lässt. Bei einem solchen Verfahren wird das Niveau des Zugfahrzeuges vor dem Kontakt mit dem Sattelauflieger abgesenkt und zum konkreten Koppelvorgang wieder angehoben.

Derartige Verfahren sind aus der DE 10 2006 057 610 A1, DE 10 2014 110 498 A1, EP 1 740 400 B1 und der EP 1 874 616 B1 bekannt. Dieser Stand der Technik soll durch die Erfindung weiterentwickelt werden, wobei insbesondere ein autonomer oder durch eine Person ferngesteuerter Ankuppelvorgang möglichst schnell und sanft erfolgen soll, um Schäden an dem Sattelzapfen und/oder der Kupplungsplatte zu vermeiden.

Weiterhin offenbaren die WO2005105194A1 ein Verfahren zum Abstellen und Aufnehmen eines Sattelaufliegers und die WO2007102777A1 eine automatische Einstellung der Kupplungsanordnung eines Zugfahrzeugs, so dass ein Anhänger so sanft wie möglich vom Fahrzeug gelöst werden kann.

Die Lösung dieser Aufgabe wird mit einem Verfahren erreicht, welches die Merkmale des Anspruchs 1 aufweist. Die abhängigen Ansprüche geben vorteilhafte Weiterbildungen dieses Steuerungsverfahren an. Zudem wird die Verwendung des erfindungsgemäßen Verfahrens in einem Steuergerät einer Niveauregelungseinrichtung eines Kraftfahrzeuges ganz allgemein beansprucht, denn das Verfahren lässt sich vorteilhaft nicht nur in Lastkraftwagen sondern auch in Personenkraftwagen mit einer entsprechenden Niveauregelungseinrichtung nutzen. Schließlich wird ein Lastkraftwagen beansprucht, welcher als Zugfahrzeug zum Ziehen eines als Sattelauflieger ausgebildeten Fahrzeuganhängers ausgebildet ist, und welcher ein Steuergerät aufweist, welches mit dem noch zu beschreibenden Verfahren betreibbar ist.

Der Erfindung betrifft demnach ein Verfahren zur Erkennung und/oder Steuerung eines Ankupplungsvorgangs zwischen einem Zugfahrzeug und einem als Sattelauflieger ausgebildeten Fahrzeuganhänger, wobei das Zugfahrzeug eine Kupplungsplatte und der Sattelauflieger eine Sattelplatte mit einem Sattelzapfen aufweist, welcher im gekuppelten Zustand in einer Verriegelungsvorrichtung der Kupplungsplatte fixiert ist, und bei dem das Zugfahrzeug eine pneumatische Niveauregelungseinrichtung aufweist, mittels der sich der Abstand zwischen der wenigstens einen Hinterachse des Zugfahrzeugs und der Verriegelungsvorrichtung der Kupplungsplatte unterschiedlich einstellen lässt. Bei einem solchen Verfahren wird das Niveau des Zugfahrzeuges vor dem Kontakt mit dem Sattelauflieger abgesenkt und zum konkreten Koppelvorgang wieder angehoben.

Zur Lösung der gestellten Aufgabe ist vorgesehen, dass der Kontakt der Kupplungsplatte des Zugfahrzeugs mit der Sattelplatte des Sattelaufliegers durch eine Änderung der Stellgeschwindigkeit ermittelt wird, mit welcher der Abstand zwischen der wenigstens einen Hinterachse des Zugfahrzeugs und der Verriegelungsvorrichtung der Kupplungsplatte vergrößert wird.

Das Erkennen eines solchen mechanischen Widerstands beim Vergrößern des Abstandes zwischen der wenigstens einen Hinterachse des Zugfahrzeugs und der Verriegelungsvorrichtung der Kupplungsplatte, also dem ersten Kontakt der Kupplungsplatte des Zugfahrzeugs mit der Sattelplatte des Sattelaufliegers, kann mit Vorteil durch das Messen derjenigen Verstell- bzw. Stellgeschwindigkeit, insbesondere der Änderung der Verstellgeschwindigkeit, ermittelt werden, mit welcher der Abstand zwischen der wenigstens einen Hinterachse des Zugfahrzeugs und der Verriegelungsvorrichtung der Kupplungsplatte vergrößert wird. Diese Verstellgeschwindigkeit ist bevorzugt durch die Ermittlung des zurückgelegten Stelleweges über die Zeit feststellbar. Sobald sich die Stellgeschwindigkeit plötzlich ändert, insbesondere verringert, kann auf einen mechanischen Kontakt zwischen der Kupplungsplatte und der Sattelplatte geschlossen werden.

Eine bevorzugte Weiterbildung der Erfindung sieht vor, dass der erwähnte Abstand von einem ersten Abstandswert H1 auf den geringstmöglichen, zweiten Abstandswert H2 reduziert wird, dass dann das Zugfahrzeug rückwärts soweit an den Sattelauflieger herangefahren wird, bis die Kupplungsplatte und die Sattelplatte einander überdecken, dass dann mit konstanter Stellgeschwindigkeit der Abstand von dem zweiten Abstandswert H2 zu einem dritten Abstandswert H3 vergrößert wird, bei dem ein erster Kontakt zwischen der Kupplungsplatte und die Sattelplatte ermittelt wird, dass dann der Abstand auf einen vierten Abstandswert H4 weiter vergrößert wird, welcher ein sicheres und für den Sattelzapfen schadloses Verbinden desselben mit der Verriegelungsvorrichtung der Kupplungsplatte gewährleistet, und dass abschließend das Zugfahrzeug weiter rückwärts soweit an den Sattelauflieger herangefahren wird, bis der Sattelzapfen die Verriegelungsvorrichtung der Kupplungsplatte erreicht hat.

Durch den beschriebenen mehrstufigen Ankoppelvorgang kann dieser im Vergleich zu bekannten Ankoppelvorgängen sehr schnell und sehr sanft erfolgen, so dass eine Beschädigung insbesondere des Sattelzapfens sicher vermeidbar ist. Hierzu trägt bei, dass bis zu dem Feststellen des ersten mechanischen Kontakts zwischen der Kupplungsplatte und der Sattelplatte eine vergleichsweise große Verstellgeschwindigkeit beim Anheben des Fahrgestells des Zugfahrzeugs genutzt werden kann, und dass nach diesem ersten Kontakt für den restlichen Verstellweg eine deutlich geringere Stellgeschwindigkeit nutzbar ist. Zudem wird durch den erwähnten ersten mechanischen Kontakt von einem diesbezüglichen Steuergerät erlernt, in welcher Höhe sich die Sattelplatte des Sattelaufliegers in Bezug zum Straßenniveau oder in Bezug zu der wenigstens einen Hinterachse des Zugfahrzeugs tatsächlich befindet. Diese Höhe hängt nicht zuletzt davon ab, wie weit eine Stütze des Sattelaufliegers ausgefahren ist, sondern auch davon, ob sich der Fuß der Stütze und/oder die Räder der Hinterachse des Zugfahrzeugs in einer Bodensenke oder auf einer Fahrbahnerhöhung befinden.

Eine Weiterbildung des vorgestellten Verfahrens sieht folgende konkrete Verfahrensschritte vor:
a) Verringern des Abstandes zwischen der Verriegelungsvorrichtung der Kupplungsplatte und zumindest einer Hinterachse des Zugfahrzeugs durch Betätigen der Niveauregelungseinrichtung von einem ersten Abstandswert H1 auf einen zweiten Abstandswert H2, wobei der zweite Abstandswert H2 gewährleistet, dass die Kupplungsplatte des Zugfahrzeugs berührungsfrei unter der Sattelplatte des Sattelaufliegers platzierbar ist.
b) Rückwärts heranfahren des Zugfahrzeugs an den Sattelauflieger und dabei platzieren der Kupplungsplatte unter der Sattelplatte derart übereinander, dass der Sattelzapfen einen vorgegebenen Sicherheitsabstand von der Kupplungsplatte einhält.
c) Vergrößern des Abstandes zwischen der Verriegelungsvorrichtung der Kupplungsplatte und der zumindest einen Hinterachse des Zugfahrzeugs durch betätigen der Niveauregelungseinrichtung von dem zweiten Abstandswert H2 bis zu einem dritten Abstandswert H3, bei welchem ein mechanischer Kontakt zwischen der Kupplungsplatte und der Sattelplatte festgestellt wird.
d) Bestimmen des dritten Abstandswerts H3 zwischen der zumindest einen Hinterachse des Zugfahrzeugs und der Verriegelungsvorrichtung der Kupplungsplatte in dieser ersten Kontaktposition.
e) Weiteres vergrößern des Abstandes zwischen der zumindest einen Hinterachse des Zugfahrzeugs und der Verriegelungsvorrichtung der Kupplungsplatte durch erneutes betätigen der Niveauregelungseinrichtung auf einen vierten Abstandswert H4, ab dessen Erreichen ein schadloses und sicheres Verbinden zwischen der Kupplungsplatte sowie dem Sattelzapfen an der Sattelplatte gewährleistet ist.
f) Weiteres rückwärts heranfahren des Zugfahrzeugs an den Sattelauflieger soweit, bis der Sattelzapfen die Verriegelungsvorrichtung der Kupplungsplatte erreicht hat.

Weiter kann vorgesehen sein, dass das Zugfahrzeug zumindest soweit rückwärts an den Sattelauflieger herangefahren wird, dass die Sattelplatte den Rand der Kupplungsplatte soweit übergreift, dass eine Kraftübertragung zwischen der Kupplungsplatte und der Sattelplatte stattfinden kann. Demnach braucht keine große Überdeckung zwischen der Kupplungsplatte und der Sattelplatte vorhanden sein, es genügt, wenn lediglich ein kleiner Überdeckungsbereich besteht, welcher dem Steuergerät der Niveauregelungseinrichtung des Zugfahrzeugs erkennen lässt, dass ein mechanischer Widerstand in der Stellrichtung vorhanden ist.

Die Stellgeschwindigkeit wird vorzugsweise ermittelt, während Luftfederbälge der Niveauregelungseinrichtung an der wenigstens einen Hinterachse des Zugfahrzeugs mit einem konstanten Druckluft-Volumenstrom befüllt werden. Hierbei kann spätestens nach einer anfänglichen positiven Beschleunigungsphase von einer konstanten Stellgeschwindigkeit ausgegangen werden. Verringert sich diese Stellgeschwindigkeit, dann kann dadurch auf einen mechanischen Kontakt zwischen der Kupplungsplatte und der Sattelplatte geschlossen werden.

Die Stellgeschwindigkeit ist bevorzugt während der ersten Abstandsvergrößerung H2/H3 höher als bei der letzten Abstandsvergrößerung H3/H4, so dass der erste Stelleweg bis zum ersten mechanischen Kontakt zwischen der Kupplungsplatte und der Sattelplatte vergleichsweise schnell überwunden wird, während der letzte, kleinere Stellweg vergleichsweise langsam und sanft zurückgelegt wird.

Das erläuterte Verfahren kann gesteuert durch ein Steuergerät autonom durchgeführt werden. Hierbei wird das Zugfahrzeug alleine durch das Steuergerät sowohl hinsichtlich seiner Rangiertätigkeit als auch hinsichtlich des Absenkens und dann Anhebens seines Fahrrahmens gesteuert. Es ist aber auch möglich, dass das vorgestellte Verfahren ferngesteuert durch eine Person durchgeführt wird, die sich in dem Zugfahrzeug oder außerhalb des Zugfahrzeugs befindet.

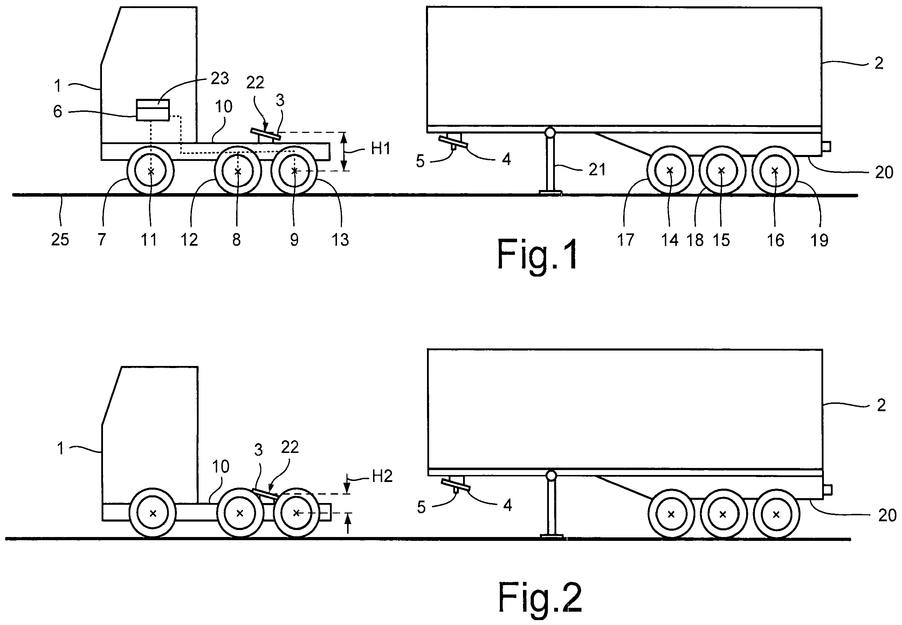

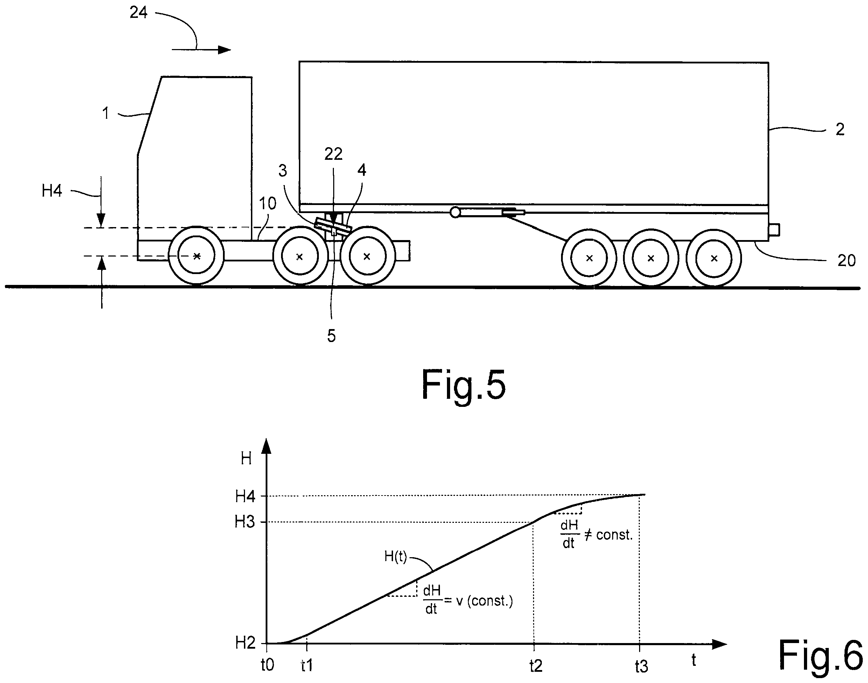

Die Erfindung wird nachstehend anhand eines in der Zeichnung dargestellten Ausführungsbeispiels weiter erläutert. In der Zeichnung zeigen die Figuren 1 bis 5 ein Zugfahrzeug und einen als Sattelauflieger ausgebildeten Fahrzeuganhänger in unterschiedlichen Steuerungssituationen, in welchen ein Abkuppelvorgang mit dem Verfahren gemäß der Erfindung durchgeführt wird. Figur 6 zeigt ein Weg-Zeit-Diagramm, in dem die Veränderung des Abstandes zwischen den beiden Hinterachsen und der Verriegelungsvorrichtung der Kupplungsplatte des Zugfahrzeugs während der Durchführung des Verfahrens gemäß der Erfindung dargestellt ist.

Demnach ist in den Figuren 1 bis 5 ein Zugfahrzeug 1 dargestellt, welches eine Vorderachse 11 und zwei Hinterachsen 8, 9 aufweist, an denen luftbereifte Räder 7, 12, 13 drehbar befestigt sind. Das Zugfahrzeug 1 weist ein von den Fahrzeugachsen 8, 9, 11 getragenes Fahrgestell 10 oder Fahrzeugrahmen auf, welches einen Aufbau mit einer nicht weiter bezeichneten Fahrerkabine und eine Koppelvorrichtung für die Ankopplung eines als Sattelauflieger 2 ausgebildeten Anhängerfahrzeugs aufweist. Die Koppelvorrichtung besteht vereinfacht dargestellt aus einer Kupplungsplatte 3, die eine Verriegelungsvorrichtung 22 aufweist. Diese Verriegelungsvorrichtung 22 nimmt zum Ankoppeln des Sattelaufliegers 2 an das Zugfahrzeug 1 einen Sattelzapfen 5 in sich auf, welcher an einer Sattelplatte 4 befestigt ist und in Richtung zur Fahrbahn 25 weist, wobei die Sattelplatte 4 am Rahmen 20 des Sattelaufliegers 2 befestigt ist.

Der Rahmen 20 des Sattelaufliegers 2 wird von drei Achsen 14, 15, 16 getragen, an denen jeweils zwei luftbereifte Räder 17, 18, 19 drehbar befestigt sind. Der Sattelauflieger 2 verfügt zudem über eine schwenkbar an seinem Rahmen 20 befestigte Stütze 21, die sich in ihrer Länge verstellen und mit einem Stützenfuß auf der Fahrbahn 25 abstellen lässt. Diese Stütze 21 trägt im abgestellten Zustand des Sattelaufliegers 2 einen Teil der Last desselben nahe demjenigen Bereich, in dem die Sattelplatte 5 angeordnet ist.

Das Zugfahrzeug 1 verfügt über eine pneumatische Niveauregelungseinrichtung 6, zu der wie bekannt ein Steuergerät 23, eine Druckerzeugungseinrichtung, ein Druckspeicher, zu den Radachsen 8, 9, 11 führende Druckluftleitungen und an den Radachsen 8, 9, 11 angeordnete Luftfederbälge gehören. Da eine solche Niveauregelungseinrichtung 6 auch aus dem eingangs genannten Stand der Technik bekannt ist, wird hier auf eine genauere Darstellung und Beschreibung derer Komponenten verzichtet. Mittels dieser Niveauregelungseinrichtung 6 kann der Abstand der Radachsen 8, 9, 11 in Bezug zu dem Fahrgestell 10 beziehungsweise zu der damit starr verbundenen Verriegelungsvorrichtung 22 an der Kupplungsplatte 3 des Zugfahrzeugs 1 verstellt werden.
Fig. 1 zeigt das Zugfahrzeug 1 vor Beginn eines gemäß der Erfindung durchzuführenden Ankoppelvorgangs an den Sattelauflieger 2. Dabei befindet sich das Zugfahrzeug 1 in seiner normalen Fahrkonfiguration, bei welcher der Abstand zwischen den Radachsen 8, 9, 11 und der Verriegelungsvorrichtung 22 einen ersten Abstandswert H1 aufweist, welcher der größte einzustellende Abstandswert sein kann.
Zu Beginn des erfindungsgemäßen Steuerungsverfahrens wird gemäß Fig. 2 der Abstand zwischen den Radachsen 8, 9, 11 und der Verriegelungsvorrichtung 22 auf einen zweiten Abstandswert H2 reduziert, welcher in diesem Ausführungsbeispiel der geringste einzustellende Abstandswert H2 ist. Dieser zweite Abstandswert H2 ist auf jeden Fall so gering, dass das Zugfahrzeug 1 ohne Kontakt zwischen seiner Kupplungsplatte 3 und der Sattelplatte 4 unter das stützennahe Ende des Sattelaufliegers 2 fahren kann.

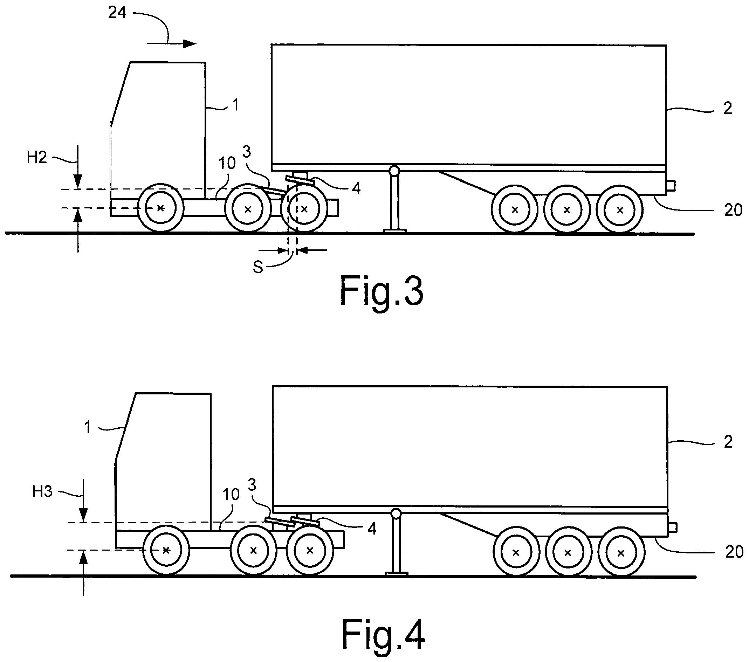

Fig. 3 zeigt diese Situation, in der das Zugfahrzeug 1 auf den zweite Abstandswert H2 abgesenkt autonom oder von einen Fahrer gesteuert in Rückwärtsfahrtrichtung 24 unter den Sattelauflieger 2 gefahren ist und dort angehalten hat. Erkennbar berühren sich die Kupplungsplatte 3 und die Sattelplatte 4 dabei noch nicht. Das Zugfahrzeug 1 ist lediglich soweit unter den Sattelauflieger 2 gefahren, dass die Überdeckung zwischen der Kupplungsplatte 3 und der Sattelplatte 4 so groß ist, dass der Sattelzapfen 5 einen ausreichend großen Sicherheitsabstand S von der Kupplungsplatte 3 hat. Dieser Sicherheitsabstand S beträgt bei den üblichen diesbezüglichen Koppelvorrichtungen etwa 0,7 Meter. Durch das Einhalten des Sicherheitsabstandes S wird gewährleistet, dass beim rückwärts heranfahren des Zugfahrzeugs 1 an den Sattelauflieger 2 der Sattelzapfen 5 auf keinen Fall mit der Kupplungsplatte 3 kollidiert.
Anschließend wird, wie Fig. 4 veranschaulicht, die Niveauregelungseinrichtung 6 erneut betätigt, um den Abstand zumindest zwischen den beiden Hinterachsen 8, 9 des Zugfahrzeugs 1 und der Verriegelungsvorrichtung 22 der Kupplungsplatte 3 auf einen dritten Abstandswert H3 zu vergrößern. Dabei trifft die Kupplungsplatte 3 auf die Sattelplatte 4, ohne dass dabei der Sattelzapfen 5 berührt wird. Sobald ein mechanischer Kontakt zwischen der Kupplungsplatte 3 und der Sattelplatte 4 von dem Steuergerät 23 festgestellt wurde, wird der Verstellvorgang kurzzeitig beendet.
   Das Feststellen des ersten mechanischen Kontakts zwischen der Kupplungsplatte 3 und der Sattelplatte 4 erfolgt vorzugsweise durch die Messung der Stellgeschwindigkeit v bei der Vergrößerung des Abstandes zwischen zumindest den beiden Hinterachsen 8, 9 und der Verriegelungsvorrichtung 22 der Kupplungsplatte 3. Diese Stellgeschwindigkeit v kann vergleichsweise einfach durch eine Messung des Stellweges zwischen zumindest den beiden Hinterachsen 8, 9 und der Verriegelungsvorrichtung 22 über die Zeit t bestimmt werden. Selbstverständlich kann der Stellweg auch über andere Abstände gemessen werden, etwa mittels des Abstandes zwischen einer Hinterachse 8, 9 des Zugfahrzeugs 1 und dessen Fahrgestell 10. Wenn die so ermittelte Stellgeschwindigkeit v bei der Vergrößerung des Abstandes von den beiden Hinterachsen 8, 9 zu der Verriegelungsvorrichtung 22 der Kupplungsplatte 3 abnimmt, kann auf das Vorliegen eines mechanischen Kontakts zwischen der Kupplungsplatte 3 und der Sattelplatte 4 geschlossen werden, so dass dann die Vergrößerung des beschrieben Abstandes zunächst unterbrochen wird.
Um die Ankoppelung des Sattelaufliegers 2 an das Zugfahrzeug 1 zu vollenden, wird, wie in Fig. 5 dargestellt, der Abstand zwischen zumindest den beiden Hinterachsen 8, 9 und der Verriegelungsvorrichtung 22 der Kupplungsplatte 3 auf einen solchen vierten Abstandswert H4 vergrößert, ab dessen Erreichen ein schadloses und sicheres Verbinden zwischen der Kupplungsplatte 3 und dem Sattelzapfen 5 an der Sattelplatte 4 gewährleistet ist. Schließlich wird das Zugfahrzeug 1 erneut in Rückwärtsfahrtrichtung 24 bewegt, und zwar nur soweit, bis der Sattelzapfen 5 die Verriegelungsvorrichtung 22 der Kupplungsplatte 3 erreicht hat und dort mittels eines Verriegelungsmechanismus verriegelt wird. Abschließend kann die Stütze 21 des Sattelaufliegers hochgeschwenkt werden, wodurch das Gespann aus Zugfahrzeug 1 und Sattelauflieger 2 abfahrbereit ist.
Fig. 6 zeigt den gerade beschriebenen Steuerungsverlauf beim Vergrößern des Abstandes zwischen zumindest den beiden Hinterachsen 8, 9 des Zugfahrzeugs 1 und der Verriegelungsvorrichtung 22 der Kupplungsplatte 3 zum Ankuppeln an den Sattelauflieger 2 in einem Weg-Zeit-Diagramm. Zum Zeitpunkt t = 0 weist der Abstand zwischen den Radachsen 8, 9 und der Verriegelungsvorrichtung 22 des Zugfahrzeugs 1 den geringsten Abstandswert H2 auf. Ab dem Zeitpunkt t0 werden die Luftfederbälge des Zugfahrzeugs 1 mit einem konstanten Volumenstrom an Druckluft befüllt, um den größten Abstandswert H4 zu erreichen, bei welchem eine sichere Verbindung zwischen dem Zugfahrzeug 1 und dem Sattelauflieger 2 möglich ist. In dem kurzen Zeitraum t = 0 bis t1, in dem die Druckfederbälge vorbefüllt werden, erfolgt die Abstandsvergrößerung zunächst nicht linear, was in dem Diagramm gut zu erkennen ist. Danach, in dem Zeitraum t1 bis t2, wird der Abstand H2/H3 zwischen den Radachsen 8, 9 und der Verriegelungsvorrichtung 22 des Zugfahrzeugs 1 dagegen wegen des konstanten Volumenstroms an Druckluft mit einer konstanten Stellgeschwindigkeit v vergrößert.

Sobald die Kupplungsplatte 3 des Zugfahrzeugs 1 in mechanischen Kontakt mit der Sattelplatte 3 des Sattelaufliegers 2 gelangt, reduziert sich die Stellgeschwindigkeit v messbar. Die Messung der Stellgeschwindigkeit v erfolgt vorzugsweise mittels eines Stellwegsensors, dessen Streckenmesswerte in Bezug zu demjenigen Zeitraum gesetzt werden, welcher jeweils seit der letzten Streckenmessung vergangen ist. Der bei dem erwähnten Kontakt erreichte dritte Abstandswert H3 wird von dem Steuergerät 23 der Niveauregelungseinrichtung 24 erfasst und daraus derjenige weitere Stellweg H3/H4 ermittelt, welcher bis zu demjenigen vierten Abstandswert H4 noch zu bewältigen ist, bei dem ein sicheres verbinden des Sattelzapfens 5 des Sattelaufliegers 2 mit der Verriegelungsvorrichtung 22 der Kupplungsplatte 3 des Zugfahrzeugs 1 möglich ist. Die letzte Wegstrecke von dem dritten Abstandswert H3 bis zum vierten Abstandswert H4 wird dann mit einer vergleichsweise geringen Stellgeschwindigkeit v zurückgelegt, so dass in diesem letzten Anhebungsbereich ein sanftes und schadfreies koppeln von Zugfahrzeug 1 und Sattelauflieger 2 erfolgt.

Das erfindungsgemäße Verfahren kann auch für einen Ankuppelvorgang zwischen einem Kraftfahrzeug und einen Deichselanhänger genutzt werden, bei denen die Koppelvorrichtungen zwar abweichend ausgebildet sind, die Steuerungsfunktionen jedoch wie beschrieben durchgeführt werden.

### Bezugszeichenliste (Bestandteil der Beschreibung)

- 1: Zugfahrzeug, Lastkraftwagen, Kraftfahrzeug
- 2: Sattelauflieger
- 3: Kupplungsplatte des Zugfahrzeugs
- 4: Sattelplatte des Sattelaufliegers
- 5: Sattelzapren des Sattelaufliegers
- 6: Niveauregelungseinrichtung
- 7: Vorderachse des Zugfahrzeugs
- 8: Erste Hinterachse des Zugfahrzeugs
- 9: Zweite Hinterachse des Zugfahrzeugs
- 10: Fahrgestell des Zugfahrzeugs
- 11: Vorderrad des Zugfahrzeugs
- 12: Erstes Rad der Hinterachse des Zugfahrzeugs
- 13: Zweites Rad der Hinterachse des Zugfahrzeugs
- 14: Erste Achse des Sattelaufliegers
- 15: Zweite Achse des Sattelaufliegers
- 16: Dritte Achse des Sattelaufliegers
- 17: Erstes Rad des Sattelaufliegers
- 18: Zweites Rad des Sattelaufliegers
- 19: Drittes Rad des Sattelaufliegers
- 20: Rahmen des Sattelaufliegers
- 21: Stütze des Sattelaufliegers
- 22: Verriegelungsvorrichtung der Kupplungsplatte
- 23: Steuergerät der Niveauregelungseinrichtung
- 24: Rückwärtsfahrtrichtung
- 25: Fahrbahn
- H: Abstand zwischen der Hinterachse des Zugfahrzeugs und der Verriegelungsvorrichtung der Kupplungsplatte des Sattelaufliegers
- H1: Erster Abstandswert (normale Fahrhöhe)
- H2: Zweiter Abstandswert (geringste Fahrhöhe)
- H3: Dritter Abstandswert (Kontakthöhe)
- H4: Vierter Abstandswert (Ankoppelhöhe)
- S: Sicherheitsabstand
- t: Zeit
- v: Stellgeschwindigkeit

## Patentansprüche

1. Verfahren zur Erkennung und/oder Steuerung eines Ankupplungsvorgangs zwischen einem Zugfahrzeug (1) und einem als Sattelauflieger (2) ausgebildeten Fahrzeuganhänger, wobei das Zugfahrzeug (1) eine Kupplungsplatte (3) und der Sattelauflieger (2) eine Sattelplatte (4) mit einem Sattelzapfen (5) aufweist, welcher im gekuppelten Zustand in einer Verriegelungsvorrichtung (22) der Kupplungsplatte (3) fixiert ist, und bei dem das Zugfahrzeug (1) eine pneumatische Niveauregelungseinrichtung (6) aufweist, mittels der sich der Abstand (H) zwischen der wenigstens einen Hinterachse (8, 9) des Zugfahrzeugs (1) und der Verriegelungsvorrichtung (22) der Kupplungsplatte (3) unterschiedlich einstellen lässt, **dadurch gekennzeichnet, dass**
der Kontakt der Kupplungsplatte (3) des Zugfahrzeugs (1) mit der Sattelplatte (4) des Sattelaufliegers (2) durch eine Änderung der Stellgeschwindigkeit (v) ermittelt wird, mit welcher der Abstand zwischen der wenigstens einen Hinterachse (8, 9) des Zugfahrzeugs (1) und der Verriegelungsvorrichtung (22) der Kupplungsplatte (3) vergrößert wird.

2. Verfahren nach Anspruch 1, **dadurch gekennzeichnet, dass**
der erwähnte Abstand von einem ersten Abstandswert (H1) auf den geringstmöglichen, zweiten Abstandswert (H2) reduziert wird,
dass dann das Zugfahrzeug (1) rückwärts soweit an den Sattelauflieger (2) herangefahren wird, bis die Kupplungsplatte (3) und die Sattelplatte (4) einander überdecken, dass dann mit konstanter Stellgeschwindigkeit (v) der Abstand von dem zweiten Abstandswert (H2) zu einem dritten Abstandswert (H3) vergrößert wird,
bei dem ein erster Kontakt zwischen der Kupplungsplatte (3) und die Sattelplatte (4) ermittelt wird,
dass dann der Abstand auf einen vierten Abstandswert (H4) weiter vergrößert wird, welcher ein sicheres und für den Sattelzapfen (5) schadloses verbinden desselben mit der Verriegelungsvorrichtung (22) der Kupplungsplatte (3) gewährleistet,
und dass abschließend das Zugfahrzeug (1) weiter rückwärts soweit an den Sattelauflieger (2) herangefahren wird, bis der Sattelzapfen (5) die Verriegelungsvorrichtung (22) der Kupplungsplatte (3) erreicht hat.

3. Verfahren nach Anspruch 1 oder 2, **gekennzeichnet durch** folgende Verfahrensschritte:
a) Verringern des Abstandes zwischen der Verriegelungsvorrichtung (22) der Kupplungsplatte (3) und zumindest einer Hinterachse (8, 9) des Zugfahrzeugs (1) durch betätigen der Niveauregelungseinrichtung (6) von einem ersten Abstandswert (H1) auf einen zweiten Abstandswert (H2), wobei der zweite Abstandswert (H2) gewährleistet, dass die Kupplungsplatte (3) des Zugfahrzeugs (1) berührungsfrei unter der Sattelplatte (4) des Sattelaufliegers (2) platzierbar ist.
b) Rückwärts heranfahren des Zugfahrzeugs (1) an den Sattelauflieger (2) und dabei platzieren der Kupplungsplatte (3) unter der Sattelplatte (4) derart, dass der Sattelzapfen (5) einen vorgegebenen Sicherheitsabstand (S) von der Kupplungsplatte (3) einhält.
c) Vergrößern des Abstandes zwischen der Verriegelungsvorrichtung (22) der Kupplungsplatte (3) und der zumindest einen Hinterachse (8, 9) des Zugfahrzeugs (1) durch betätigen der Niveauregelungseinrichtung (6) von dem zweiten Abstandswert (H2) bis zu einem dritten Abstandswert (H3), bei welchem ein mechanischer Kontakt zwischen der Kupplungsplatte (3) und der Sattelplatte (4) festgestellt wird.
d) Bestimmen des dritten Abstandswerts (H3) zwischen der zumindest einen Hinterachse (8, 9) des Zugfahrzeugs (1) und der Verriegelungsvorrichtung (22) der Kupplungsplatte (3) in dieser ersten Kontaktposition.
e) Weiteres vergrößern des Abstandes zwischen der zumindest einen Hinterachse (8, 9) des Zugfahrzeugs (1) und der Verriegelungsvorrichtung (22) der Kupplungsplatte (3) durch erneutes betätigen der Niveauregelungseinrichtung (6) auf einen vierten Abstandswert (H4), ab dessen erreichen ein schadloses und sicheres verbinden zwischen der Kupplungsplatte (3) sowie dem Sattelzapfen (5) an der Sattelplatte (4) gewährleistet ist.
f) Weiter rückwärts heranfahren des Zugfahrzeugs (1) an den Sattelauflieger (2) soweit, bis der Sattelzapfen (5) die Verriegelungsvorrichtung (22) der Kupplungsplatte (3) erreicht hat.

4. Verfahren nach einem der Ansprüche 1 bis 3, **dadurch gekennzeichnet, dass** das Zugfahrzeug (1) zumindest soweit rückwärts an den Sattelauflieger (2) herangefahren wird, dass die Sattelplatte (4) den Rand der Kupplungsplatte (3) soweit übergreift, dass eine Kraftübertragung zwischen der Kupplungsplatte (3) und der Sattelplatte (4) stattfinden kann.

5. Verfahren nach einem der vorherigen Ansprüche, **dadurch gekennzeichnet, dass** die Stellgeschwindigkeit (v) ermittelt wird, während Luftfederbälge der Niveauregelungseinrichtung (6) an der wenigstens einen Hinterachse (8, 9) mit einem konstanten Druckluft-Volumenstrom befüllt werden.

6. Verfahren nach Anspruch 5, **dadurch gekennzeichnet, dass** die Stellgeschwindigkeit (v) während der ersten Abstandsvergrößerung (H2/H3) höher als bei der letzten Abstandsvergrößerung (H3/H4), so dass der erste Stellweg bis zum ersten mechanischen Kontakt zwischen der Kupplungsplatte (3) und der Sattelplatte (4) vergleichsweise schnell überwunden wird, während der letzte, kleinere Stellweg vergleichsweise langsam und sanft zurückgelegt wird

7. Verfahren nach einem der vorherigen Ansprüche, **dadurch gekennzeichnet, dass** dieses gesteuert durch ein Steuergerät (23) autonom durchgeführt wird.

8. Verfahren nach einem der vorherigen Ansprüche, **dadurch gekennzeichnet, dass** dieses ferngesteuert durch eine Person durchgeführt wird, die sich in dem Zugfahrzeug (1) oder außerhalb des Zugfahrzeugs (1) befindet.

9. Verwendung des Verfahrens mit den Merkmalen von wenigstens einem der Verfahrensansprüche in einem Steuergerät (23) einer Niveauregelungseinrichtung (6) eines Kraftfahrzeuges (1).

10. Lastkraftwagen, ausgebildet als Zugfahrzeug (1) zum Ziehen eines als Sattelauflieger (2) ausgebildeten Fahrzeuganhängers, welcher ein Steuergerät (23) aufweist, welches mit dem Verfahren gemäß wenigstens einem der Verfahrensansprüche betrieben wird.

## Claims

1. Method for identifying and/or controlling a coupling procedure between a towing vehicle (1) and a vehicle trailer that is embodied as a semi-trailer (2), wherein the towing vehicle (1) comprises a coupling plate (3) and the semi-trailer (2) comprises a fifth wheel plate (4) having a king pin (5) that is fixed in the coupled state in a locking device (22) of the coupling plate (3) and where the towing vehicle (1) comprises a pneumatic level controlling device (6) by means of which it is possible to set different distances (H) between the at least one rear axle (8, 9) of the towing vehicle (1) and the locking device (22) of the coupling plate (3), **characterized in that**
the contact between the coupling plate (3) of the towing vehicle (1) and the fifth wheel plate (4) of the semi-trailer (2) is determined by means of a change of the adjusting speed (v) with which the distance between the at least one rear axle (8, 9) of the towing vehicle (1) and the locking device (22) of the coupling plate (3) is increased.

2. Method according to Claim 1, **characterized in that** the mentioned distance from a first distance value (H1) to the lowest possible second distance value (H2) is reduced,
that the towing vehicle (1) is then driven backward so far toward the semi-trailer (2) until the coupling plate (3) and the fifth wheel plate (4) overlap one another,
that the distance from the second distance value (H2) to a third distance value (H3) is then increased at a constant adjusting speed (v),
where a first contact is determined between the coupling plate (3) and the fifth wheel plate (4),
that the distance to a fourth distance value (H4) is then further increased, which ensures a secure connection for the king pin (5) to the locking device (22) of the coupling plate (3), said connection not damaging the king pin (5),
and that finally the towing vehicle (1) is driven further backward so far toward the semi-trailer (2) until the king pin (5) has reached the locking device (22) of the coupling plate (3).

3. Method according to Claim 1 or 2, **characterized by** the following method steps:
a) Reducing the distance between the locking device (22) of the coupling plate (3) and at least one rear axle (8, 9) of the towing vehicle (1) by means of actuating the level controlling device (6) from a first distance value (H1) to a second distance value (H2), wherein the second distance value (H2) ensures that the coupling plate (3) of the towing vehicle (1) may be placed under the fifth wheel plate (4) of the semi-trailer (2) in a contact-free manner.
b) Driving the towing vehicle (1) backward toward the semi-trailer (2) and in this case placing the coupling plate (3) below the fifth wheel plate (4) in such a manner that the king pin (5) maintains a predetermined safe distance (S) from the coupling plate (3).
c) Increasing the distance between the locking device (22) of the coupling plate (3) and the at least one rear axle (8, 9) of the towing vehicle (1) by means of actuating the level controlling device (6) from the second distance value (H2) to a third distance value (H3) at which a mechanical contact between the coupling plate (3) and the fifth wheel plate (4) is determined.
d) Determining the third distance value (H3) between the at least one rear axle (8, 9) of the towing vehicle (1) and the locking device (22) of the coupling plate (3) in this first contact position.
e) Further increasing the distance between the at least one rear axle (8, 9) of the towing vehicle (1) and the locking device (22) of the coupling plate (3) by means of again actuating the level controlling device (6) to a fourth distance value (H4) after which it is ensured that the coupling plate (3) and also the king pin (5) are securely connected to the fifth wheel plate (4) in a manner that does not cause any damage.
f) Driving the towing vehicle (1) further backward toward the semi-trailer (2) until the king pin (5) has reached the locking device (22) of the coupling plate (3) .

4. Method according to any one of Claims 1 to 3, **characterized in that** the towing vehicle (1) is driven at least so far backward toward the semi-trailer (2) that the fifth wheel plate (4) grips so far over the edge of the coupling plate (3), that a transmission of force may take place between the coupling plate (3) and the fifth wheel plate (4).

5. Method according to any one of the preceding claims, **characterized in that** the adjusting speed (v) is determined whilst air springs of the level controlling device (6) are being filled with a constant compressed air volume flow at the at least one rear axle (8, 9).

6. Method according to Claim 5, **characterized in that** the adjusting speed (v) during the first increase in distance (H2/H3) is higher than during the last increase in distance (H3/H4) with the result that the first adjustment path until the first mechanical contact between the coupling plate (3) and the fifth wheel plate (4) is overcome comparatively rapidly, whilst the last smaller adjustment path is covered comparatively slowly and smoothly.

7. Method according to any one of the preceding claims, **characterized in that** said method is implemented autonomously in a controlled manner by means of a control device (23).

8. Method according to any one of the preceding claims, **characterized in that** said method is implemented remotely by a person who is in the towing vehicle (1) or outside the towing vehicle (1).

9. Use of the method having the features of at least one of the method claims in a control device (23) of a level controlling device (6) of a motor vehicle (1).

10. Truck that is embodied as a towing vehicle (1) for towing a vehicle trailer that is embodied as a semi-trailer (2), said vehicle trailer comprising a control device (23) that is operated using the method in accordance with at least one of the method claims.

## Revendications

1. Procédé de reconnaissance et/ou de commande d'un processus d'attelage entre un véhicule tracteur (1) et une remorque de véhicule conçue comme une semi-remorque (2), le véhicule tracteur (1) comportant une plaque d'attelage (3) et la semi-remorque (2) comportant une plaque d'appui (4) qui est munie d'un pivot d'attelage (5) et qui est fixée, à l'état attelé, dans un dispositif de verrouillage (22) de la plaque d'attelage (3), et le véhicule tracteur (1) comportant un mécanisme de réglage de niveau pneumatique (6) permettant d'effectuer différents réglages de la distance (H) entre l'au moins un essieu arrière (8, 9) du véhicule tracteur (1) et le dispositif de verrouillage (22) de la plaque d'attelage (3), **caractérisé en ce que**
le contact de la plaque d'attelage (3) du véhicule tracteur (1) avec la plaque d'appui (4) de la semi-remorque (2) est déterminé par une variation de la vitesse de réglage (v) à laquelle la distance entre l'au moins un essieu arrière (8, 9) du véhicule tracteur (1) et le dispositif de verrouillage (22) de la plaque d'attelage (3) est augmentée.

2. Procédé selon la revendication 1, **caractérisé en ce que**
la distance mentionnée est réduite d'une première valeur de distance (H1) à la deuxième valeur de distance (H2) la plus petite possible,
le véhicule tracteur (1) est ensuite reculé vers la semi-remorque (2) jusqu'à ce que la plaque d'attelage (3) et la plaque d'appui (4) se recouvrent,
la distance est ensuite augmentée de la deuxième valeur de distance (H2) à une troisième valeur de distance (H3), pour laquelle un premier contact entre la plaque d'attelage (3) et la plaque d'appui (4) est déterminé, à une vitesse de réglage constante (v),
la distance est ensuite augmentée jusqu'à une quatrième valeur de distance (H4) qui garantit une liaison sûre, sans danger pour le pivot d'attelage (5), de ce dernier au dispositif de verrouillage (22) de la plaque d'attelage (3),
et enfin le véhicule tracteur (1) est davantage reculé vers la semi-remorque (2) jusqu'à ce que le pivot d'attelage (5) atteigne le dispositif de verrouillage (22) de la plaque d'attelage (3).

3. Procédé selon la revendication 1 ou 2, **caractérisé par** les étapes de procédé suivantes :
a) réduire la distance entre le dispositif de verrouillage (22) de la plaque d'attelage (3) et au moins un essieu arrière (8, 9) du véhicule tracteur (1) par actionnement du mécanisme de réglage de niveau (6) d'une première valeur de distance (H1) à une deuxième valeur de distance (H2), la deuxième valeur de distance (H2) garantissant que la plaque d'attelage (3) du véhicule tracteur (1) peut être placée sans contact sous la plaque d'appui (4) de la semi-remorque (2),
b) reculer le véhicule tracteur (1) vers la semi-remorque (2) et placer la plaque d'attelage (3) sous la plaque d'appui (4) de telle sorte que le pivot d'attelage (5) maintienne une distance de sécurité (S) spécifiée par rapport à la plaque d'attelage (3),
c) augmenter la distance entre le dispositif de verrouillage (22) de la plaque d'attelage (3) et l'au moins un essieu arrière (8, 9) du véhicule tracteur (1) par actionnement du mécanisme de réglage de niveau (6) de la deuxième valeur de distance (H2) à une troisième valeur de distance (H3) pour laquelle un contact mécanique entre la plaque d'attelage (3) et la plaque d'appui (4) est déterminé,
d) déterminer la troisième valeur de distance (H3) entre l'au moins un essieu arrière (8, 9) du véhicule tracteur (1) et le dispositif de verrouillage (22) de la plaque d'attelage (3) dans cette première position de contact,
e) augmenter davantage la distance entre l'au moins un essieu arrière (8, 9) du véhicule tracteur (1) et le dispositif de verrouillage (22) de la plaque d'attelage (3) par un nouvel actionnement du mécanisme de réglage de niveau (6) à une quatrième valeur de distance (H4) à partir de laquelle une liaison sûre et sans danger entre la plaque d'attelage (3) et le pivot d'attelage (5) au niveau de la plaque d'appui (4) est garantie,
f) reculer davantage le véhicule tracteur (1) vers la semi-remorque (2) jusqu'à ce que le pivot d'attelage (5) atteigne le dispositif de verrouillage (22) de la plaque d'attelage (3) .

4. Procédé selon l'une des revendications 1 à 3, **caractérisé en ce que** le véhicule tracteur (1) est reculé vers la semi-remorque (2) au moins jusqu'à ce que la plaque d'appui (4) recouvre le bord de la plaque d'attelage (3) jusqu'à établir une transmission de force entre la plaque d'attelage (3) et la plaque d'appui (4).

5. Procédé selon l'une des revendications précédentes, **caractérisé en ce que** la vitesse de réglage (v) est déterminée pendant que les soufflets amortisseurs pneumatiques du mécanisme de réglage de niveau (6) au niveau de l'au moins un essieu arrière (8, 9) sont remplis à un débit volumique d'air comprimé constant.

6. Procédé selon la revendication 5, **caractérisé en ce que** la vitesse de réglage (v) lors de la première augmentation de distance (H2/H3) est supérieure à celle lors de la dernière augmentation de distance (H3/H4) de sorte que le premier trajet de réglage jusqu'au premier contact mécanique entre la plaque d'attelage (3) et la plaque d'appui (4) est surmonté relativement rapidement, tandis que le dernier trajet de réglage plus petit est parcouru relativement lentement et en douceur.

7. Procédé selon l'une des revendications précédentes, **caractérisé en ce qu'**il est mis en œuvre de façon autonome en étant commandé par une unité de commande (23).

8. Procédé selon l'une des revendications précédentes, **caractérisé en ce qu'**il est mis en œuvre de manière télécommandée par une personne qui se trouve dans le véhicule tracteur (1) ou à l'extérieur du véhicule tracteur (1).

9. Utilisation du procédé présentant les caractéristiques de l'une au moins des revendications de procédé dans une unité de commande (23) d'un mécanisme de réglage de niveau (6) d'un véhicule automobile (1).

10. Camion, conçu comme un véhicule tracteur (1) destiné à tracter une remorque de véhicule conçue comme une semi-remorque (2) et comportant une unité de commande (23) qui fonctionne selon le procédé de l'une au moins des revendications de procédé.
